# EUROPÄISCHE PATENTSCHRIFT

(11) **EP 2 874 800 B1**
(45) Veröffentlichungstag und Bekanntmachung des Hinweises auf die Patenterteilung: **14.09.2016**
(21) Anmeldenummer: 13732934.8
(22) Anmeldetag: 01.07.2013
(51) Int. Cl.: B29C 70/20, B29C 70/38, B29C 70/56, B29C 70/54, B29B 11/16

(54) **VORRICHTUNG UND VERFAHREN ZUR HERSTELLUNG VON FASERVERSTÄRKTEN KUNSTSTOFFBAUTEILEN**
DEVICE AND METHOD FOR PRODUCING FIBRE-REINFORCED PLASTICS COMPONENTS
DISPOSITIF ET PROCÉDÉ DE FABRICATION DE COMPOSANTS EN MATIÈRE PLASTIQUE RENFORCÉE PAR DES FIBRES

(30) Priorität: 18.07.2012 DE 102012212530
(43) Veröffentlichungstag der Anmeldung: 27.05.2015
(73) Patentinhaber: Voith Patent GmbH, 89522 Heidenheim (DE); Audi AG, 85045 Ingolstadt (DE)
(72) Erfinder: LANG, Markus-Thomas, 80809 München (DE); KAISER, Michael, 81547 München (DE); GÖTTINGER, Marco, 81543 München (DE); GIERL, Sebastian, 89159 Augsburg (DE)
(86) Internationale Anmeldenummer: PCT/EP2013/063778
(87) Internationale Veröffentlichungsnummer: WO 2014/012775

(56) Entgegenhaltungen:
- WO-A2-2009/077581
- DE-A1-102011 007 018
- US-A1- 2006 162 143

## Beschreibung

Die Erfindung betrifft eine Vorrichtung und ein Verfahren zur Herstellung von 3-dimensionalen Bauteilen aus thermoplastischem, faserverstärktem Kunststoff ausgehend von imprägnierten Fasertapes.

Faserverstärkte Kunststoffbauteile weisen eine Struktur aus Verstärkungsfasern auf, welche in ein Kunststoff-Matrixmaterial eingebettet ist. Für komplexere und hochwertigere Bauteile ist oftmals eine mehrlagige Faserstruktur mit möglichst belastungsgerecht angeordneten Faserrichtungen notwendig. Als Ausgangsmaterial für die genannte Herstellung werden imprägnierte thermoplastische Fasertapes verwendet. Solche Fasertapes bestehen aus einer einlagigen bandförmigen Fasergrundstruktur, die bereits mit dem benötigten Matrixmaterial imprägniert ist. Zur Verfügung stehen solche Fasertapes beispielsweise als Rollenmaterial. Eine Möglichkeit zur Herstellung solcher imprägnierten Fasertapes wird beispielsweise in DE42 18 434A1 beschrieben.

Bekannt ist es, aus solchen imprägnierten Fasertapes mehrlagige, rechteckige Platten herzustellen, die als Halbzeuge für die weitere Verarbeitung dienen. In US2011/0111168 A1wird beschrieben, wie aus solchen Fasertapes multiaxiale ebene Platten von bis zu 2 m Breite gefertigt werden können, die eine gute Verformbarkeit in Längsrichtung, sowie eine möglichst richtungsunabhängige Festigkeit aufweisen, und die gelagert und später weiterverarbeitet werden können. Ein Nachteil bei der Weiterverarbeitung dieser Platten ist, dass erheblicher Verschnitt an teurem Halbzeugmaterial anfällt, wenn komplexer geformte Bauteile produziert werden.

Alternativ kann mit Hilfe sogenannter Tapeleger das imprägnierte Fasertape direkt auf einer Form abgelegt werden, wie es in DE100 12 378A1 beschrieben ist. Der Fasertape wird beim Ablegen aufgeheizt, damit es sich mit den anderen Tapes verbindet. Um beliebige Bauteilformen und beanspruchungsgerechte Faserlagen zu ermöglichen, werden für die Bewegung des Tapelegekopfes Mehrachsportalsysteme oder Knickarmroboter eingesetzt. Diese Bewegungssysteme sind sehr kompliziert in der Steuerung und relativ langsam bzw. haben geringe Ablegeraten in kg/h.

Aus der US2006/0162143 ist eine Vorrichtung zur Herstellung von 3-dimensionalen Bauteilen aus faserverstärktem Kunststoff ausgehend von imprägnierten Fasertapes bekannt, bei welcher die Fasertapes in mehreren Lagen auf einen Ablagetisch abgelegt werden.

Die WO2009/077581 offenbart ferner eine Vorrichtung zur Herstellung von faserverstärkten Bauteilen mit einem Greifer zur Ablage von Faserrovings.

Die Aufgabe der Erfindung ist es, für die genannte Herstellung eine Vorrichtung und ein Verfahren bereitzustellen, welches kostengünstiger ist, unter möglichst optimaler Materialausnutzung und welches besser automatisierbar und für die Serienfertigung 3-dimensionaler, auch komplexerer Bauteile geeignet ist.

Die Aufgabe wird für die Vorrichtung erfindungsgemäß dadurch gelöst, dass die Vorrichtung
- mehrere nebeneinander angeordnete Greifer, zum Greifen von mit Matrixmaterial imprägnierten Fasertapes, wobei die Greifer auf zueinander parallelen Pfaden jeweils zwischen einer Abholposition und einer Maximalposition linear verschoben werden können, so dass die Fasertapes zwischen den Greifern und jeweils zugeordneten Übergabevorrichtungen aufgespannt werden können,
- einen drehbaren Tisch, auf dem die Fasertapes in einer ersten und wenigstens in einer weiteren Lage abgelegt werden können,
- eine Trennvorrichtung, die die Fasertapes nahe an der Übergabevorrichtung trennen kann,
- eine Heizeinrichtung zum Erwärmen der Lagen auf 160° bis 400°C,
- ein erstes Formwerkzeug und eines oder mehrere weitere Formwerkzeuge, welche so zusammengefahren werden können, dass sie die Lagen 3-dimensional umformen,
- und eine Transportvorrichtung, die die noch warmen Lagen zwischen die Formwerkzeuge transportieren kann, aufweist.

Durch die erfindungsgemäße Ausführung ergeben sich mehrere Vorteile. Durch die Verwendung mehrerer Greifer parallel, können über der gesamten Bauteilfläche gleichzeitig die Fasertapes abgelegt werden. Aufgrund der parallelen und linearen Bewegung kann die Vorrichtung und deren Automatisierung sehr viel einfacher gestaltet werden, als das bei den bekannten Tapelegern der Fall ist. Das macht das Ganze schneller und günstiger und auch flexibler für Umstellungen auf verschiedene zu fertigende Bauteile. Bevorzugt sind bei der erfindungsgemäßen Vorrichtung mindestens 10, besonders bevorzugt mindestens 20 Greifer vorhanden. Da die Greifer unabhängig voneinander auf verschiedene Zwischenpositionen verfahren werden können, können die Fasertapes gemäß der späteren Bauteilkontur abgelegt werden. Dadurch wird unnötiger Verschnitt an teurem Rohmaterial, wie er bei Verwendung rechteckiger Halbzeuge anfällt, vermieden. Aufgrund der Verwendung von imprägnierten Fasertapes als Ausgangsmaterial muss zum einen keine nachträgliche Imprägnierung der mehrlagigen Faserstrukturen mit der Gefahr von unvollständiger Penetration erfolgen, und zum anderen kann auf teure, vorgefertigte Halbzeuge wie beispielsweise mehrlagige Platten verzichtet werden. Weiterhin ist es energiesparend, wenn die Erwärmung, die zur Verbindung der Fasertapes bzw. der Lagen notwendig ist, gleichzeitig auch noch für die 3-dimensionale Umformung genutzt wird, indem keine Zwischenlagerung des Lagenpakets vorgesehen wird, sondern die Umformung direkt anschließend erfolgt, indem die noch warmen Lagen in das Formwerkzeug eingelegt werden.

Die hergestellten 3-dimensionalen Bauteile können bereits die Endkontur haben oder sie sind ein Zwischenprodukt, das nochmal umgeformt wird.

Die Fasern der verwendeten Fasertapes sind bevorzugt Carbon-, Glas- oder Aramidfasern. Bevorzugt werden einlagige Fasertapes verwendet und bevorzugt solche, bei denen die Fasern überwiegend oder vollständig in eine Richtung, besonders bevorzugt in Längsrichtung, orientiert sind. Es können auch Fasertapes eingesetzt werden, die eine Gelege- oder Gewebegrundstruktur aufweisen. Das Matrixmaterial, das als Imprägnierung aufgebracht ist, beispielsweise in Form von Folien, Tropfen, Schichten, Garnen, als Pulver oder als Faserummantelung, ist ein thermoplastischer Kunststoff, bevorzugt PEEK, PPS oder ein Polyamid. Die imprägnierten Fasertapes werden beispielsweise als Rollenware in mehreren Abwickelstationen bereitgestellt.

Die Trennvorrichtung kann beispielsweise als Messer, Kreismesser, Scheren, Laser, Ultraschall-Klinge oder oszillierende Klinge ausgeführt sein. Durch das Trennen kann der Tisch zwischen dem Ablegen der ersten und der weiteren Lage gedreht werden. Der drehbare Tisch ist bevorzugt um +/-30 bis +/-90° drehbar, so lassen sich Lagen in verschiedenen Winkeln ablegen, um die Fasertapes möglichst belastungsgerecht anordnen zu können. In einer bevorzugten Ausführung ist der Tisch im Wesentlichen senkrecht zu den parallelen Pfaden der Greifer anheb- und absenkbar, so dass der Tisch in die Ebene der aufgespannten Fasertapes hineinbewegt und aus dieser herausbewegt werden kann. Zum Aufspannen wird der Tisch abgesenkt und zum Ablegen angehoben. Auf der Seite der Greifer kann eine weitere Trennvorrichtung vorhanden sein. Alternativ könnten auch die Greifer auf und ab bewegbar ausgeführt sein.

Die Heizeinrichtung ist bevorzugt eine IR-Heizeinrichtung oder ein Heißluftofen oder eine Induktions- oder eine Mikrowellenheizeinrichtung, sie kann aber auch beheizte Platten aufweisen, die mit den Lagen in Kontakt gebracht werden. Zusätzlich können auch eines oder mehrere Formwerkzeuge beheizbar sein, um eine gute Verformung und Konsolidierung zu ermöglichen. Es kann aber auch vorteilhaft sein, eines oder mehrere Formwerkzeuge kühlbar auszuführen, so dass das Bauteil nach der Verformung direkt abgekühlt und verfestigt werden kann. Die Übergabevorrichtungen können Klemmvorrichtungen aufweisen, die die Anfänge der Fasertapes so halten, dass die Greifer in der Abholposition diese aufnehmen können.

Zur Herstellung komplexer Bauteilgeometrien kann die Erzeugung der 3-Dimensionaliät bevorzugt zweistufig ausgeführt werden. Zunächst werden die Lagen über einer bereits leicht 3-dimensionalen Vorform auf dem Tisch abgelegt und später erfolgt die 3-dimensionale Umformung, um die endgültige Bauteilform zu erzeugen. So kann eine zu starke Verformung in einem Einzelschritt vermieden werden, was besonders bei stark 3-dimensionalen Formen die Gefahr des Verschiebens oder der Faltenbildung birgt.

Damit sich die Lagen nach dem Ablegen nicht verschieben kann es vorteilhaft sein, eine Fixiereinrichtung vorzusehen, die die Fasertapes stellenweise erwärmen kann, so dass die Lagen an diesen Stellen miteinander verbunden werden. Das kann beispielsweise mit beheizten Stempeln, anderweitig durch Kontaktwärme, durch induktive Erwärmung, mit Heißluft, mit Mikrowellenerwärmung oder mit lokalen IR-Strahlern geschehen. Im Falle von Stempeln können diese so ausgebildet sein, dass sie die Lage gegebenenfalls an die auf dem Tisch vorhandene 3-dimensionale Vorform drücken können.

Um eine Konsolidierung der Lagen zu ermöglichen und eventuell vorhandenen Luft abzupressen, kann es vorteilhaft sein, eine Presseinrichtung, insbesondere kombiniert mit der Heizeinrichtung, vorzusehen, die die Lagen während oder nach der Erwärmung miteinander verpressen kann. Die Presseinrichtung kann im Falle eines ebenen Lagenpakets zwei ebene Platten aufweisen, die gegeneinander gepresst werden und so die Lagen konsolidieren. Sie kann nach der Heizeinrichtung angeordnet sein oder mit der Heizeinrichtung kombiniert sein, indem beispielsweise die Platten beheizbar ausgeführt sind.

Um eine gute Umformbarkeit und Konsolidierung zu erreichen, kann es vorteilhaft sein, wenn die Heizeinrichtung so ausgebildet ist, dass die Lagen aus Fasertapes großflächig, insbesondere vollständig, auf 160° bis 400°C erwärmt werden können. Bevorzugt wird das Thermoplast-Matrixmaterial hierbei bis zur Schmelztemperatur (abhängig vom konkreten Thermoplast) erwärmt, um eine gleichmäßige Durchdringung zu erreichen.

Die Trennvorrichtungen sollten vorzugsweise dazu geeignet sein, an jeder Übergabevorrichtung, ggf. an jedem Greifer die Fasertapes durchtrennen zu können, auch wenn diese auf verschiedenen Positionen stehen, um die gewünschte Bauteilkontur möglichst gut abzubilden. Dazu kann die jeweilige Trennvorrichtung mit mehreren Trennmodulen über der Breite ausgeführt sein, wobei die Trennmodule zum Beispiel auf der Übergabevorrichtung oder auf dem Greifer montiert und mit ihm verschiebbar sein können. Die jeweilige Trennvorrichtung kann auch über der Breite und in der Verschieberichtung der Greifer verschiebbar ausgeführt sein.

Damit die spätere Bauteilkontur möglichst gut abgebildet werden kann, ist es von Vorteil, wenn die Breite der Greifer zwischen 10 und 300 mm, bevorzugt zwischen 30 und 100 mm beträgt. Kleinere Breiten verursachen erhöhten mechanischen Aufwand, u.a. da viele Greifer gebraucht werden, und bei größeren Breiten werden die Zugkräfte zu hoch bzw. die Gleichmäßigkeit der Fasertape-Spannung ist schwierig zu gewährleisten.

Besonders geeignet für die Bewegung der Lagen bzw. des Lagenpakets zu den Formwerkzeugen ist eine Transportvorrichtung, die einen Spannrahmen oder Klemmen zum Halten der erwärmten Lagen aufweist. Da die Lagen nach dem Erwärmen weich und formbar, aber auch klebrig werden, ist es gut, wenn das Lagenpaket an den Rändern rundherum gehalten wird. Im Falle eines bereits 3-dimensional abgelegten und somit vorgeformten Lagenpakets kann alternativ oder zusätzlich auch ein Drahtgeflecht als Unterstützung oder eine Haube vorgesehen werden. Weiterhin kann die Transportvorrichtung einen Schwenkarm oder eine Fördereinrichtung, wie beispielsweise seitliche Bänder, Ketten oder Zugseile aufweisen, mit welchem bzw. mit welcher der Spannrahmen oder die Klemmen oder das Drahtgeflecht transportiert wird. Die Transportvorrichtung transportiert die erwärmten Lagen zumindest von der Heizeinrichtung zu den Formwerkzeugen. Sie kann aber auch noch den Transport vom Tisch bis zur Heizeinrichtung übernehmen. Alternativ könnte hierfür auch eine separate Transportvorrichtung vorgesehen sein.

Wenn die Übergabevorrichtungen parallel zueinander und unabhängig voneinander in Richtung der Formwerkzeuge auf verschiedene Positionen verschoben werden können, kann auch auf dieser Seite eine Kontur gemäß der gewünschten Bauteilgeometrie abgelegt werden, und in Verbindung mit der entsprechenden Trennvorrichtung materialsparend gearbeitet werden.

Für das Verfahren wird die Aufgabe erfindungsgemäß gelöst, indem, insbesondere unter Verwendung einer oben beschriebenen Vorrichtung, die folgenden Schritte nacheinander ausgeführt werden:
a) Greifen mehrerer mit Matrixmaterial imprägnierter Fasertapes durch mehrere nebeneinander angeordnete Greifer an jeweils zugeordneten Übergabevorrichtungen,
b) Aufspannen der Fasertapes zwischen den Greifern und den jeweiligen Übergabevorrichtungen durch geradliniges, paralleles Verschieben der Greifer,
c) Ablegen der Fasertapes als eine Lage auf einem drehbaren Tisch,
d) Trennen der Fasertapes an den Übergabevorrichtungen,
e) Wiederholen der Schritte a)-d), so dass eine weitere Lage von parallel angeordneten mit Matrixmaterial imprägnierten Fasertapes abgelegt wird,
f) Erwärmen der Lagen auf 160 bis 400°C und
g) Umformen der noch warmen Lagen zu einem 3-dimensionalen Bauteil mit Hilfe eines ersten Formwerkzeugs und eines oder mehrerer weiterer Formwerkzeuge.

Die Vorteile, die sich bei der erfindungsgemäßen Vorrichtung genannt wurden, ergeben sich analog für das Verfahren. Für den Energiebedarf ist es positiv, wenn zusätzliche Erwärmungen auf 160° bis 400°C vermieden werden. Das ist beim erfindungsgemäßen Verfahren gerade der Fall durch die doppelte Nutzung der Erwärmung für das Verbinden der Tapes und der Lagen, sowie für das Umformen, indem die Schritte vom Ablegen der Tapes bis zur Umformung des Bauteils zeitlich nah hintereinander erfolgen. Während des Aufspannens ist der Tisch bevorzugter weise abgesenkt und zum Ablegen der Fasertapes kann der Tisch im Wesentlichen senkrecht zu den aufgespannten Fasertapes nach oben in die Aufspannebene hineinbewegt werden.

Für besonders komplexe Bauteilformen, beispielsweise mit Hinterschneidungen oder mit hohem Umformungsgrad, kann das Ablegen der Lagen aus Fasertapes über einer leicht 3-dimensionalen Vorform, die auf dem drehbaren Tisch vorgesehen ist, erfolgen. Die Umformung im Schritt g) muss dann nicht mehr so stark sein. Dadurch wird die Gefahr des Verschiebens oder Faltenbildens von Faserlagen vermieden und somit die Bauteilfestigkeit erhöht.

Um möglichst belastungsgerechte Faseranordnungen zu erreichen, kann der Schritt e) noch einmal oder noch mehrere Male wiederholt werden, wobei vor einem oder jeweils vor mehreren der Schritte e) der Tisch um einen bestimmten Winkel, bevorzugt zwischen 30 und 90°, gedreht wird, so dass zumindest eine Lage unter einem anderen Winkel abgelegt wird. Insgesamt ergibt sich damit ein Lagenpaket aus mehreren Lagen, die verschiedene Winkel der Fasertapes und der Faserrichtung aufweisen. Ein Beispiel für eine Schichtaufbau der Lagen kann sein: 0°/ 0°/ +45°/ -45°/ 90°/ -45°/ +45°/0°/ 0°. Dabei können in einzelnen Lagen auch nur wenige oder einzelne Fasertapes als Verstärkungsbänder aufgelegt werden.

Um ein Verrutschen der Lagen zu verhindern, kann es vorteilhaft sein, nach dem Ablegen einer oder mehrerer Lagen oder nach dem Ablegen jeder Lage wenn eine Fixierung durch stellenweise Erwärmung erfolgt. Die Erwärmung erfolgt dabei nicht großflächig sondern nur lokal, um einzelne Fixpunkte zu schaffen.

Für die Erzielung guter Materialeigenschaften ist es von Vorteil, die Lagen aus Fasertapes während oder nach dem Schritt f), d.h. dem Erwärmen, und vor dem Schritt g), d.h. dem Umformen, zu verpressen. Dadurch werden die Lagen konsolidiert und eventuell vorhandene Luft wird ausgepresst. Bei eben abgelegten Lagen kann das mit Hilfe von zwei Platten, die aneinander gepresst werden erfolgen.

Um die Verformbarkeit für die Umformung in Schritt g) zu erhöhen und um eine gute Konsolidierung zur erzielen, können die Lagen im Schritt f) großflächig, insbesondere vollständig, auf 160° bis 400°C erwärmt werden.

Zur weiteren Minimierung des Verschnittes können die Greifer und bevorzugt auch die Übergabevorrichtungen bei Schritt b) oder vor Schritt c) auf unterschiedliche Positionen, entsprechend der späteren Bauteilkontur verfahren werden.

Damit die Fasertapes, insbesondere bei Verwendung einer 3-dimensionalen Vorform auf dem Tisch, sich besser ablegen lassen, können die Fasertapes vor dem Ablegen erwärmt werden, bevorzugt auf eine Temperatur zwischen 80 und 260°C. Die geeignete Temperatur ergibt sich je nach Thermoplast, zum Beispiel bei PEEK sehr viel höher als bei Polyamid. In jedem Fall sollte sie unter der Schmelztemperatur liegen, so dass die Kunststoffmatrix nur etwas weich wird, aber noch nicht schmilzt.

Anhand von Ausführungsbeispielen werden weitere vorteilhafte Merkmale der Erfindung erläutert unter Bezugnahme auf die Zeichnungen.
- **Fig.1**: Erster Teil einer erfindungsgemäßen Vorrichtung (Ablegen)
- **Fig.2**: Zweiter Teil einer erfindungsgemäßen Vorrichtung (Erwärmen, Umformen)
- **Fig.3**: Schematische, schrittweise Darstellung in Schritten zum Ablegen und Fixieren mehrerer Lagen auf dem drehbaren Tisch
- **Fig.4**: Weitere erfindungsgemäße Vorrichtung

Nachfolgend werden die Figuren detaillierter beschrieben. Die in den Ausführungsbeispielen genannten Merkmale können erfindungsgemäß auch einzeln für die erfindungsgemäße Vorrichtung oder für das entsprechende Verfahren genutzt werden und nicht nur in der in den Ausführungsbeispielen beschriebenen Kombination.

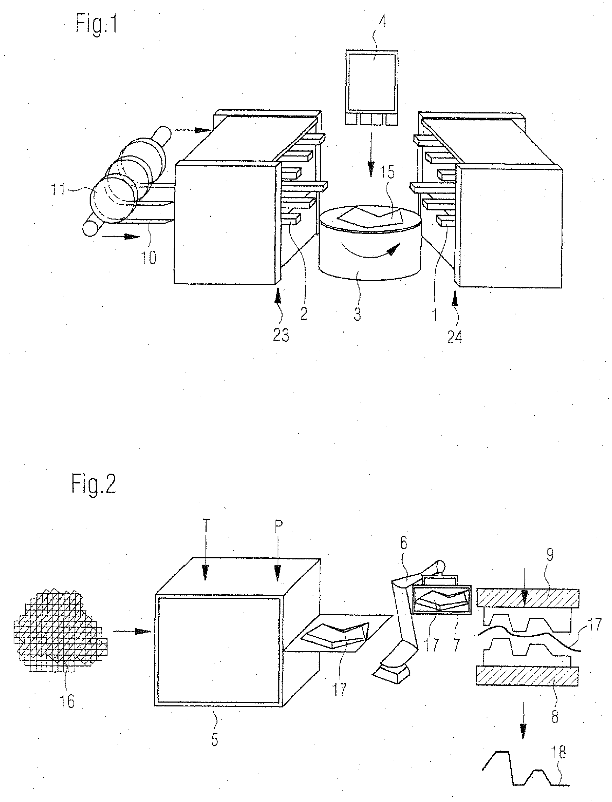

In **Fig.1** ist der erste Teil einer erfindungsgemäßen Vorrichtung dargestellt und zwar nach dem Ablegen einer oder mehrerer Lagen von Fasertapes. Die imprägnierten Fasertapes 10 werden von den Abwickelstationen zu den nebeneinander angeordneten Übergabevorrichtungen 2 geführt. Die Greifer 1 sind ebenfalls nebeneinander angeordnet und lassen sich jeweils zwischen der Abholposition 23 und der Maximalposition 24 geradlinig und parallel zueinander verschieben. In der Abholposition greifen die Greifer 1 die Anfänge der Fasertapes 10 und ziehen sie über den drehbaren Tisch 3 hinweg. Die Greifer 1 bewegen sich auf eine Zwischenposition gemäß der gewünschten Bauteilkontur. Auch die Übergabevorrichtungen 2, die beispielsweise als Klemmvorrichtungen ausgeführt sind, lassen sich verschieben, um sich der Bauteilkontur so gut wie möglich anzunähern. Dadurch kann der anfallende Verschnitt auf ein Minimum begrenzt werden. Der Tisch 3 wird dann bevorzugt angehoben, so dass die Fasertapes als einzelne Lage abgelegt werden. Durch Wiederholung des Vorganges werden nacheinander zumindest zwei Lagen abgelegt und so wird das Lagenpaket 15, umfassend die erste Lage und die eine oder mehrere weitere Lagen, auf dem Tisch 3 gebildet. Die nicht dargestellte Trennvorrichtung trennt dann die Fasertapes auf der Seite der Übergabevorrichtungen ab. Auf der Seite der Greifer 1 kann eine weitere Trennvorrichtung vorgesehen sein oder die Greifer 1 werden geöffnet und geben somit die Fasertape-Anfänge frei. In gleicher Art und Weise können weitere Lagen auf dem Tisch abgelegt werden. Durch den Drehtisch 3 können die einzelnen Lagen unter verschiedenen Winkeln abgelegt werden. Dadurch ist eine belastungsgerechte und konturnahe Ablage der Fasertapes möglich. Nach jeder oder nur nach einzelnen Lagen können mit Hilfe der Fixiereinrichtung 4, die bevorzugt als Heizpatrone, IR-Heizung oder Induktionsheizung ausgeführt ist, einzelne Stellen erwärmt und damit fixiert werden. Insbesondere kann der Tisch 3 auch eine leicht 3-dimensionale Vorform aufweisen, über die die Lagen 15 von Fasertapes gelegt werden. Dadurch wird vor allem bei stark 3-dimensionalen Bauteilen der Grad der späteren Umformung reduziert. Dadurch verringert sich die Gefahr von Verschiebungen oder Falten in der Faserstruktur. Zur Verbesserung des Ablegens, insbesondere wenn eine 3-dimensionale Vorform auf dem Tisch vorhanden ist, können die Fasertapes 10 vor dem Ablegen erwärmt werden, bevorzugt auf eine Temperatur zwischen 80 und 260°C.

**Fig.2** zeigt den zweiten Teil einer erfindungsgemäßen Vorrichtung, der das Erwärmen und Umformen für ein vorgeformtes Lagenpaket zeigt. Analog kann die Erfindung für ein eben abgelegtes Lagenpaket angewendet werden. Das in diesem Beispiel vorgeformte Lagenpaket 16, umfassend die erste und die eine oder mehreren weiteren Lagen, wird vom nicht mehr dargestellten drehbaren Tisch einem Behandlungsraum 5 zugeführt. Um die Vorform zu erhalten, kann es beispielsweise auf einem entsprechenden Drahtgeflecht, das sich beim Ablegen zwischen Vorform und erster Lage befand, transportiert werden. Im Behandlungsraum ist eine Heizeinrichtung und eine Presseinrichtung vorhanden, mit welchen das Lagenpaket bevorzugt großflächig auf 160 bis 400°C erwärmt wird und stellenweise verpresst wird. Das erwärmte vorgeformte Lagenpaket 17, umfassend die erste und die eine oder mehreren weiteren Lagen, wird mit einer Transportvorrichtung, die beispielsweise als Schwenkarm 6 mit einem Spannrahmen 7 ausgeführt ist, zwischen das erste Formwerkzeug 8 und das zweite Formwerkzeug 9 gebracht. Durch Schließen des ersten und des zweiten Formwerkzeuges 8,9 wird das erwärmte vorgeformte Lagenpaket 17 3-dimensional auf die gewünschte Bauteilform umgeformt. Nach dem Abkühlen ist das Bauteil 18 verfestigt. Die Formwerkzeuge 8,9 können beheizt sein oder gekühlt sein. Je nachdem ob zur besseren Verformbarkeit noch weiter erwärmt oder zur Stabilisierung der Form bereits gekühlt werden soll.

Anstatt des Schwenkarms 6 kann auch eine Ketten- oder Zugseil-Förderung eingesetzt werden. Anstelle des Spann- oder Klemmrahmens 7 kann auch ein Drahtgeflecht das vorgeformte erwärmte Lagenpaket 17 stützen. Weiterhin können auch zwei getrennte Behandlungsstationen zur Erwärmung mit einer Heizeinrichtung und zur Verpressung mit einer Presseinrichung vorgesehen werden. Die Reihenfolge von Verpressung und Heizeinrichtung kann auch getauscht sein, so dass erst die Verpressung, insbesondere wenn eine Fixiereinrichtung vorhanden ist, erfolgt und dann die großflächige Erwärmung.

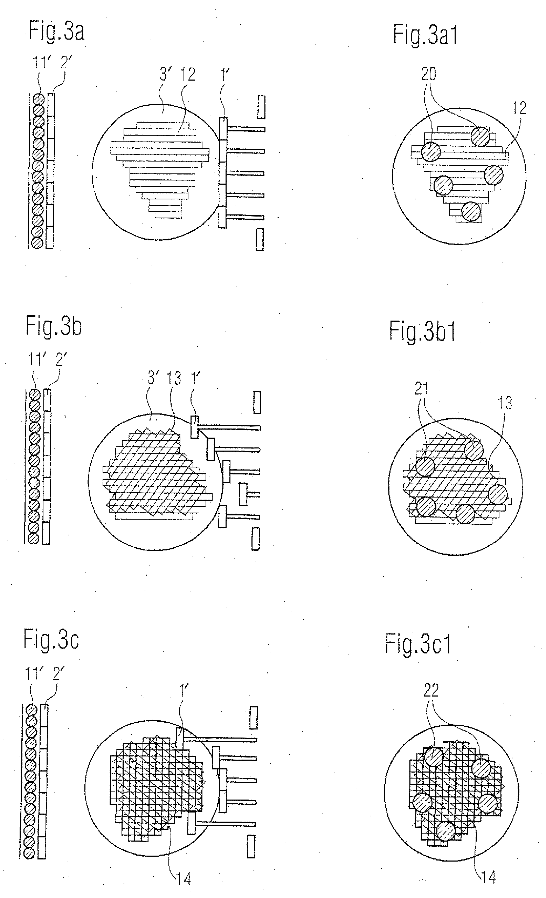

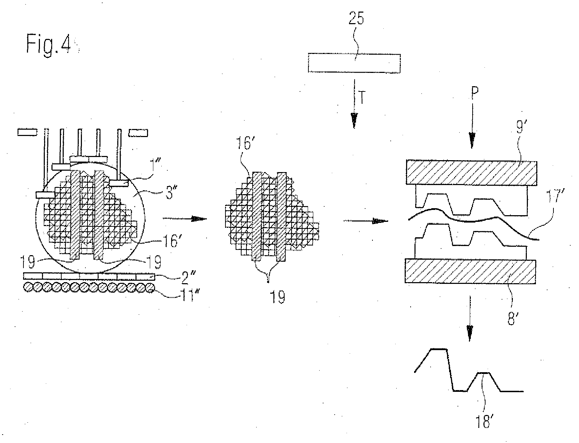

Um die Ablage mehrerer Lagen zu veranschaulichen, sind in Fig.3 die Schritte nacheinander dargestellt. Fig.3a zeigt eine erfindungsgemäße Vorrichtung nach dem Ablegen der ersten Lage 12 von Fasertapes auf dem ebenen drehbaren Tisch 3'. Die Greifer 1' sind bereits etwas zurückgefahren und die Übergabevorrichtungen 2' sind an der Abholposition. Die Abwickelstationen 11' stellen die imprägnierten Fasertapes bereit. Der in Fig.3a₁ gezeigte Schritt ist optional. Hier wird veranschaulicht, wie eine Fixierung durch lokale Erwärmung an bestimmten Fixierstellen 20 vorgenommen werden könnte. Danach erfolgt die in Fig.3b dargestellte Ablage einer weiteren Lage 13 auf der ersten Lage 12. Beispielsweise unter einem Winkel von etwa 30° zur ersten Lage. Dazu wurde der Tisch 3' nach dem Ablegen der ersten Lage 12 um den entsprechenden Winkel gedreht. Auch nach der zweiten Lage 13 kann eine Fixierung durch Erwärmung an den Fixierstellen 21 erfolgen (Fig.3b₁). Fig.3c stellt das Ablegen einer dritten Lage 14 auf den anderen Lagen 12,13 dar. Auch hier wurde der Tisch 3' vorher gedreht, beispielsweise so dass die dritte Lage 14 unter etwa 60° zur ersten Lage 12 abgelegt werden kann. Auch danach kann gegebenenfalls eine Fixierung an Fixierstellen 22 erfolgen (Fig.3c₁). Zusammen bilden die Lagen das Lagenpaket, in Fig.1 beispielsweise mit 15 bezeichnet, welches dann als vorgeformtes Lagenpaket 16 zur Erwärmung transportiert wird und als erwärmtes Lagenpaket 17 weiter umgeformt wird zum Bauteil 18. In Fig.4 sind die jeweiligen Bezugszeichen mit 16',17',18' usw. bezeichnet.
Dadurch das die Greifer 1' und bevorzugt auch die Übergabevorrichtungen 2' auf verschiedene Positionen verfahren werden können, wird eine konturnahe Ablage der Fasertapes gemäß der gewünschten Bauteilform möglich, so dass der Verschnitt minimiert werden kann. Die Trennvorrichtungen sind nicht extra dargestellt. Die beschriebene Vorrichtung und das beschriebene Verfahren können für das ebene Ablegen auf dem Tisch 3' genauso wie für das Ablegen über einer 3-dimensionalen Vorform, die auf dem Tisch 3' vorhanden ist, vorgesehen sein. Die Fixierung kann bevorzugt über beheizte Fixierstempel erfolgen, die gegebenenfalls die Lage aus Fasertapes an die Vorform andrückt.

Die in **Fig.4** dargestellte Vorrichtung ist eine weitere Variante für eine erfindungsgemäße Ausführung. Auf einem Tisch 3" mit einer darauf befindlichen Vorform werden mehrere Lagen an Fasertapes abgelegt, so dass ein vorgeformtes Lagenpaket 16' entsteht. Ebenfalls gezeigt sind wieder die verfahrbaren Greifer 1" die Übergabevorrichtungen 2", die gegebenenfalls auch verfahrbar sein können, und die Abwickelstationen 11" für Bereitstellung der imprägnierten Fasertapes. In diesem Beispiel wurden auch zwei einzelne Verstärkungsstreifen 19 aufgelegt. Das Lagenpaket 16' und die Verstärkungsstreifen 19 werden mit einer Heizeinrichtung 25 auf 160° bis 400°C erwärmt. Das vorgeformte erwärmte Lagenpaket 17' wird dann zwischen das erste Formwerkzeug 8' und das zweite Formwerkzeug 9' transportiert und 3-dimensional auf die gewünschte Bauteilform umgeformt, indem das erste und das zweite Formwerkzeug 8',9' geschlossen werden. Durch Anwendung eines erhöhten Pressdrucks beim Umformen kann das Lagenpaket zusätzlich noch konsolidiert werden und es kann Luft abgepresst werden. Das 3-dimensionale Bauteil 18' verfestigt, wenn es abgekühlt ist. Der Abkühlprozess kann ganz oder teilweise im Kontakt mit den Formwerkzeugen 8' oder 9' stattfinden.

### Bezugszeichenliste

- 1,1',1": Greifer
- 2,2',2": Übergabevorrichtungen
- 3,3',3": drehbarer Tisch
- 4: Fixiereinrichtung
- 5: Behandlungsraum mit Heizeinrichtung und Presseinrichtung
- 6: Schwenkarm
- 7: Spannrahmen
- 8,8': erstes Formwerkzeug
- 9,9': zweites bzw. weiteres Formwerkzeug
- 10: imprägnierte Fasertapes
- 11,11'1": Abwickelstationen
- 12: erste abgelegte Lage
- 13: zweite abgelegte Lage
- 14: dritte abgelegte Lage
- 15: Lagenpaket, umfassend die erste und eine oder mehrere weitere Lagen, auf dem Tisch
- 16,16': vorgeformtes Lagenpaket, umfassend die erste und eine oder mehrere weitere Lagen, vor Erwärmung
- 17,17': vorgeformtes Lagenpaket, umfassend die erste und eine oder mehrere weitere Lagen, nach Erwärmung
- 18,18': 3-dimensionales Bauteil, umfassend die erste und eine oder mehrere weitere Lagen
- 19: einzelne Verstärkungsstreifen
- 20,21,22: Fixierstellen
- 23: Lage der Abholpositionen
- 24: Lage der Maximalpositionen
- 25: Heizeinrichtung

## Patentansprüche

1. Vorrichtung zur Herstellung von 3-dimensionalen Bauteilen (18,18') aus thermoplastischem faserverstärktem Kunststoff ausgehend von imprägnierten Fasertapes (10), aufweisend
- mehrere nebeneinander angeordnete Greifer (1,1',1"), zum Greifen von mit Matrixmaterial imprägnierten Fasertapes (10), wobei die Greifer (1,1',1") auf zueinander parallelen Pfaden jeweils zwischen einer Abholposition (23) und einer Maximalposition (24) linear verschoben werden können, so dass die Fasertapes (10) zwischen den Greifern (1,1',1") und jeweils zugeordneten Übergabevorrichtungen (2,2',2") aufgespannt werden können,
- einen drehbaren Tisch (3,3',3,"), auf dem die Fasertapes in einer ersten (12) und wenigstens in einer weiteren Lage (13,14) abgelegt werden können,
- eine Trennvorrichtung, die die Fasertapes nahe an der Übergabevorrichtung (2,2',2") trennen kann,
- eine Heizeinrichtung (25) zum Erwärmen der Lagen (12,13,14) auf 160° bis 400°C,
- ein erstes Formwerkzeug (8,8') und eines oder mehrere weitere Formwerkzeuge (9,9'), welche so zusammengefahren werden können, dass sie die Lagen (12,13,14) 3-dimensional umformen,
- und eine Transportvorrichtung (6), die die noch warmen Lagen (12,13,14) zwischen die Formwerkzeuge (8,8',9,9') transportieren kann.

2. Vorrichtung nach Anspruch 1
**dadurch gekennzeichnet,**
**dass** der Tisch (3,3') eine 3-dimensionale Vorform aufweist, über die die Lagen (12,13,14) abgelegt werden und/oder dass der Tisch im Wesentlichen senkrecht zu den parallelen Pfaden der Greifer (1,1',1") angehoben und abgesenkt werden kann.

3. Vorrichtung nach Anspruch 1 oder 2
**dadurch gekennzeichnet,**
**dass** eine Fixiereinrichtung (4) vorgesehen ist, die die Fasertapes stellenweise erwärmen kann, so dass die Lagen (12,13,14) an diesen Stellen miteinander verbunden werden.

4. Vorrichtung nach einem der vorherigen Ansprüche
**dadurch gekennzeichnet,**
**dass** eine Presseinrichtung (5), insbesondere kombiniert mit der Heizeinrichtung (25) vorgesehen ist, die die Lagen (12,13,14) während oder nach der Erwärmung miteinander verpressen kann.

5. Vorrichtung nach einem der vorherigen Ansprüche
**dadurch gekennzeichnet,**
**dass** das erste und/oder das eine oder die mehreren weiteren Formwerkzeuge (8,8',9,9') beheizbar oder kühlbar ausgeführt sind.

6. Vorrichtung nach einem der vorherigen Ansprüche
**dadurch gekennzeichnet,**
**dass** die Trennvorrichtungen mit mehreren Trennmodulen über der Breite ausgeführt ist oder über der Breite und in Bewegungsrichtung der Greifer (1,1',1") verschiebbar ist, so dass auch bei verschiedenen Positionen an jeder Übergabevorrichtung (2,2',2") das Fasertape (10) getrennt werden kann.

7. Vorrichtung nach einem der vorherigen Ansprüche
**dadurch gekennzeichnet,**
**dass** die Übergabevorrichtungen (2,2',2") parallel zueinander und unabhängig voneinander in Richtung der Formwerkzeuge (8,8',9,9') auf verschiedene Positionen verschoben werden können.

8. Verfahren zur Herstellung von 3-dimensionalen Bauteilen (18,18') aus thermoplastischem faserverstärktem Kunststoff ausgehend von imprägnierten Fasertapes (10), insbesondere unter Verwendung einer Vorrichtung nach einem der vorherigen Ansprüche, welches folgende Schritte nacheinander aufweist:
a) Greifen mehrerer mit Matrixmaterial imprägnierter Fasertapes (10) durch mehrere nebeneinander angeordnete Greifer (1,1',1") an jeweils zugeordneten Übergabevorrichtungen (2,2',2"),
b) Aufspannen der Fasertapes (10) zwischen den Greifern (1,1',1") und den jeweiligen Übergabevorrichtungen (2,2',2") durch geradliniges, paralleles Verschieben der Greifer (1,1',1"),
c) Ablegen der Fasertapes als eine Lage (12,13,14) auf einem drehbaren Tisch (3,3'),
d) Trennen der Fasertapes in der Nähe der Übergabevorrichtungen (2,2',2"),
e) Wiederholen der Schritte a)-d), so dass eine weitere Lage (13,14) von parallel angeordneten mit Matrixmaterial imprägnierten Fasertapes abgelegt wird,
f) Erwärmen der Lagen (12,13,14) auf 160° bis 400°C und
g) Umformen der noch warmen Lagen (12,13,14) zu einem 3-dimensionalen Bauteil mit Hilfe eines ersten Formwerkzeugs (8,8') und eines oder mehrerer weiterer Formwerkzeuge (9,9').

9. Verfahren nach Anspruch 8
**dadurch gekennzeichnet,**
**dass** das Ablegen der Fasertapes in Schritt c) über eine leicht 3-dimensionalen Vorform auf dem Tisch (3,3') erfolgt.

10. Verfahren nach einem der Ansprüche 8 oder 9
**dadurch gekennzeichnet,**
**dass** der Schritt e) noch einmal oder noch mehrere Male wiederholt wird, wobei vor einem oder jeweils vor mehreren der Schritte e) der Tisch (3,3') um einen bestimmten Winkel, bevorzugt zwischen 30 und 90°, gedreht wird, so dass zumindest eine Lage (13,14) unter einem anderen Winkel abgelegt wird.

11. Verfahren nach einem der Ansprüche 8 bis 10
**dadurch gekennzeichnet,**
**dass** nach dem Ablegen einer oder mehrerer Lagen (12,13,14) oder nach dem Ablegen jeder Lage eine Fixierung durch stellenweise Erwärmung erfolgt.

12. Verfahren nach einem der Ansprüche 8 bis 11
**dadurch gekennzeichnet,**
**dass** während oder nach dem Schritt f) und vor dem Schritt g) ein Verpressen der Lagen erfolgt und/oder dass in Schritt f) die Erwärmung großflächig erfolgt.

13. Verfahren nach einem der Ansprüche 8 bis 12
**dadurch gekennzeichnet,**
**dass** die Greifer (1,1',1") und bevorzugt auch die Übergabevorrichtungen (2,2',2") bei Schritt b) oder vor Schritt c) auf unterschiedliche Positionen, entsprechend der späteren Bauteilkontur verfahren werden.

14. Verfahren nach einem der Ansprüche 8 bis 13
**dadurch gekennzeichnet,**
**dass** die Fasertapes (10) vor dem Ablegen auf dem Tisch (3,3') erwärmt werden, insbesondere auf eine Temperatur zwischen 80 und 260°C.

## Claims

1. Device for producing three-dimensional components (18, 18') from fibre-reinforced thermoplastic material, starting from impregnated fibre tapes (10), comprising
- a plurality of grippers (1, 1', 1") arranged beside one another for gripping fibre tapes (10) impregnated with matrix material, wherein the grippers (1, 1', 1") can be displaced linearly on mutually parallel paths, in each case between a pick-up position (23) and a maximum position (24), so that the fibre tapes (10) can be tensioned between the grippers (1, 1', 1") and respectively associated transfer devices (2, 2', 2"),
- a rotatable table (3, 3', 3"), on which the fibre tapes can be laid in a first (12) and at least in one further layer (13, 14),
- a severing device, which can sever the fibre tapes close to the transfer device (2, 2', 2"),
- a heating unit (25) for heating the layers (12, 13, 14) to 160° to 400°C,
- a first moulding tool (8, 8') and one or more further moulding tools (9, 9'), which can be moved together such that they mould the layers (12, 13, 14) three-dimensionally,
- and a transport device (6), which can transport the still hot layers (12, 13, 14) between the moulding tools (8, 8', 9, 9').

2. Device according to Claim 1,
**characterized in that**
the table (3, 3') has a three-dimensional preform, over which the layers (12, 13, 14) are laid, and/or **in that** the table can be raised and lowered substantially perpendicular to the parallel paths of the grippers (1, 1', 1").

3. Device according to Claim 1 or 2,
**characterized in that**
a fixing unit (4) is provided, which can heat the fibre tapes at some locations, so that the layers (12, 13, 14) are connected to one another at these locations.

4. Device according to one of the preceding claims,
**characterized in that**
a pressing unit (5), in particular combined with the heating unit (25), is provided, which can press the layers (12, 13, 14) to one another during or after the heating.

5. Device according to one of the preceding claims,
**characterized in that**
the first and/or the one or more further moulding tools (8, 8', 9, 9') are designed such that they can be heated or cooled.

6. Device according to one of the preceding claims,
**characterized in that**
the severing device is designed with multiple severing modules over the width or is displaceable over the width and in the direction of movement of the grippers (1, 1', 1"), so that the fibre tape (10) can also be severed in different positions at each transfer device (2, 2', 2").

7. Device according to one of the preceding claims,
**characterized in that**
the transfer devices (2, 2', 2'') can be displaced parallel to one another and independently of one another to different positions in the direction of the moulding tools (8, 8', 9, 9').

8. Method for producing three-dimensional components (18, 18') from fibre-reinforced thermoplastic material, starting from impregnated fibre tapes (10), in particular by using a device according to one of the preceding claims, which has the following steps one after another:
a) gripping a plurality of fibre tapes (10) impregnated with matrix material by means of a plurality of grippers (1, 1', 1") arranged beside one another on respectively associated transfer devices (2, 2', 2"),
b) tensioning the fibre tapes (10) between the grippers (1, 1', 1") and the respective transfer devices (2, 2', 2") by means of rectilinear, parallel displacement of the grippers (1, 1', 1"),
c) laying the fibre tapes as one layer (12, 13, 14) on a rotatable table (3, 3'),
d) severing the fibre tapes in the vicinity of the transfer devices (2, 2', 2"),
e) repeating steps a) - d), so that a further layer (13, 14) of fibre tapes impregnated with matrix material and arranged in parallel is laid,
f) heating the layers (12, 13, 14) to 160° to 400°C, and
g) shaping the still hot layers (12, 13, 14) to form a three-dimensional component with the aid of a first moulding tool (8, 8') and one or more further moulding tools (9, 9').

9. Method according to Claim 8,
**characterized in that**
in step c) the fibre tapes are laid over a slightly three-dimensional preform on the table (3, 3').

10. Method according to either of Claims 8 and 9,
**characterized in that**
step e) is repeated once more or else several times, the table (3, 3') being rotated by a specific angle, preferably between 30 and 90°, before one or in each case before several of the steps e), so that at least one layer (13, 14) is laid at a different angle.

11. Method according to one of Claims 8 to 10,
**characterized in that**
following the laying of one or more layers (12, 13, 14) or following the laying of each layer, fixing is carried out by means of localized heating.
**New patent claims**

12. Method according to one of Claims 8 to 11,
**characterized in that**
during or after step f) and before step g), pressing of the layers is carried out, and/or **in that** in step f) the heating is carried out over a large area.

13. Method according to one of Claims 8 to 12,
**characterized in that**
during step b) or before step c), the grippers (1, 1', 1") and preferably also the transfer devices (2, 2', 2") are moved to different positions, corresponding to the subsequent component contour.

14. Method according to one of Claims 8 to 13,
**characterized in that**
before being laid on the table (3, 3'), the fibre tapes (10) are heated, in particular to a temperature between 80 and 260°C.

## Revendications

1. Dispositif de fabrication de composants à trois dimensions (18, 18') en matière plastique thermoplastique renforcée par des fibres en partant de bandes de fibres imprégnées (10), présentant
- plusieurs pinces disposées l'une à côté de l'autre (1, 1', 1"), pour saisir des bandes de fibres (10) imprégnées avec un matériau de matrice, dans lequel les pinces (1, 1', 1") peuvent être déplacées linéairement sur des chemins parallèles l'un à l'autre chacune entre une position de prélèvement (23) et une position maximale (24), de telle manière que les bandes de fibres (10) puissent être tendues entre les pinces (1, 1', 1") et des dispositifs de transfert (2, 2', 2") respectivement associés,
- une table tournante (3, 3', 3"), sur laquelle les bandes de fibres peuvent être déposées en une première (12) et au moins une autre couche (13, 14),
- un dispositif de séparation, qui peut séparer les bandes de fibres à proximité du dispositif de transfert (2, 2', 2"),
- un dispositif de chauffage (25) pour chauffer les couches (12, 13, 14) entre 160° et 400°C,
- un premier outil de formage (8, 8') et un ou plusieurs autres outils de formage (9, 9'), qui peuvent être rapprochés de façon à déformer les couches (12, 13, 14) en trois dimensions,
- et un dispositif de transport (6), qui peut transporter les couches encore chaudes (12, 13, 14) entre les outils de formage (8, 8', 9, 9').

2. Dispositif selon la revendication 1, **caractérisé en ce que** la table (3, 3') présente une préforme à trois dimensions, sur laquelle les couches (12, 13, 14) sont déposées et/ou **en ce que** la table peut être élevée et abaissée essentiellement perpendiculairement aux chemins parallèles des pinces (1, 1', 1").

3. Dispositif selon la revendication 1 ou 2, **caractérisé en ce qu'**il est prévu un dispositif de fixation (4), qui peut chauffer les bandes de fibres par endroits, de telle manière que les couches (12, 13, 14) puissent être assemblées l'une à l'autre à ces endroits.

4. Dispositif selon l'une quelconque des revendications précédentes, **caractérisé en ce qu'**il est prévu un dispositif de presse (5), en particulier combiné avec le dispositif de chauffage (25), qui peut presser les couches (12, 13, 14) l'une sur l'autre pendant ou après le chauffage.

5. Dispositif selon l'une quelconque des revendications précédentes, **caractérisé en ce que** le premier et/ou le ou les multiples autres outils de formage (8, 8', 9, 9') peuvent être chauffés ou refroidis.

6. Dispositif selon l'une quelconque des revendications précédentes, **caractérisé en ce que** les dispositifs de séparation sont réalisés avec plusieurs modules de séparation sur la largeur ou sont déplaçables sur la largeur et dans la direction de mouvement des pinces (1, 1', 1"), de telle manière que la bande de fibres (10) puisse aussi être séparée dans différentes positions à chaque dispositif de transfert (2, 2', 2").

7. Dispositif selon l'une quelconque des revendications précédentes, **caractérisé en ce que** les dispositifs de transfert (2, 2', 2") peuvent être déplacés parallèlement l'un à l'autre et indépendamment l'un de l'autre à différentes positions en direction des outils de formage (8, 8', 9, 9').

8. Procédé de fabrication de composants à trois dimensions (18, 18') en matière plastique thermoplastique renforcée de fibres à partir de bandes de fibres imprégnées (10), en particulier en utilisant un dispositif selon l'une quelconque des revendications précédentes, qui présente les étapes suivantes l'une après l'autre:
a) saisir plusieurs bandes de fibres (10) imprégnées de matériau de matrice au moyen de plusieurs pinces disposées l'une à côté de l'autre (1, 1', 1") à des dispositifs de transfert (2, 2', 2") respectivement associés,
b) tendre les bandes de fibres (10) entre les pinces (1, 1', 1") et les dispositifs de transfert respectifs (2, 2', 2") par un déplacement rectiligne, parallèle des pinces (1, 1', 1"),
c) déposer les bandes de fibres en une couche (12, 13, 14) sur une table tournante (3, 3'),
d) séparer les bandes de fibres à proximité des dispositifs de transfert (2, 2', 2"),
e) répéter les étapes a)-d) de façon à déposer une autre couche (13, 14) de bandes de fibres disposées parallèlement et imprégnées de matériau de matrice,
f) chauffer les couches (12, 13, 14) à 160° - 400°C, et
g) déformer les couches encore chaudes (12, 13, 14) en un composant à trois dimensions à l'aide d'un premier outil de formage (8, 8') et d'un ou de plusieurs autres outils de formage (9, 9').

9. Procédé selon la revendication 8, **caractérisé en ce que** l'on effectue le dépôt des bandes de fibres à l'étape c) sur une préforme légèrement tridimensionnelle sur la table (3, 3').

10. Procédé selon l'une des revendications 8 ou 9, **caractérisé en ce que** l'on répète l'étape e) encore une fois ou encore plusieurs fois, dans lequel, avant une ou respectivement avant plusieurs des étapes e), on fait tourner la table (3, 3') d'un angle déterminé, de préférence entre 30 et 90°, de telle manière qu'au moins une couche (13, 14) soit déposée sous un autre angle.

11. Procédé selon l'une quelconque des revendications 8 à 10, **caractérisé en ce que** l'on effectue une fixation par un chauffage par endroits après le dépôt d'une ou de plusieurs couches (12, 13, 14) ou après le dépôt de chaque couche.

12. Procédé selon l'une quelconque des revendications 8 à 11, **caractérisé en ce que** l'on effectue un pressage des couches pendant ou après l'étape f) et avant l'étape g) et/ou **en ce que** l'on effectue le chauffage sur une grande surface à l'étape f).

13. Procédé selon l'une quelconque des revendications 8 à 12, **caractérisé en ce que** l'on déplace les pinces (1, 1', 1") et de préférence aussi les dispositifs de transfert (2, 2', 2") à l'étape b) ou avant l'étape c) en différentes positions, selon le futur contour du composant.

14. Procédé selon l'une quelconque des revendications 8 à 13, **caractérisé en ce que** l'on chauffe les bandes de fibres (10) avant le dépôt sur la table (3, 3'), en particulier à une température comprise entre 80 et 260°C.
